# EUROPÄISCHE PATENTSCHRIFT

(11) **EP 0 689 065 B1**
(45) Veröffentlichungstag und Bekanntmachung des Hinweises auf die Patenterteilung: **27.06.2001**
(21) Anmeldenummer: 95108866.5
(22) Anmeldetag: 08.06.1995
(51) Int. Cl.: G02B 5/30, B42D 15/10

(54) **Optisches Bauelement**
Optical component
Composant optique

(30) Priorität: 24.06.1994 CH 201794
(43) Veröffentlichungstag der Anmeldung: 27.12.1995
(73) Patentinhaber: Rolic AG, 6301 Zug (CH)
(72) Erfinder: Schadt, Martin, CH-4411 Seltisberg (CH); Schuster, Andreas, D-79110 Freiburg (DE); Seiberle, Hubert, D-79595 Rümmingen (DE)
(74) Vertreter: Liebetanz, Michael, Dipl.-Phys.

(56) Entgegenhaltungen:
- EP-A- 0 435 029
- EP-A- 0 611 981
- WO-A-94/02329
- US-A- 4 974 941
- RESEARCH DISCLOSURE, Nr. 337, EMSWORTH GB, Seiten 410-411, XP 000310119 ARTIKEL NR.33799 'Achromatic retardation layers based on anisotropic polymer networks'
- PATENT ABSTRACTS OF JAPAN vol. 15 no. 318 (M-1146) ,14.August 1991 & JP-A-03 118198 (TOPPAN) 20.Mai 1991,

## Beschreibung

Die Erfindung betrifft ein optisches Bauelement mit einem Substrat und einer Schichtstruktur aus einer anisotropen Schicht vernetzter flüssigkristalliner Monomere in Kontakt mit einer Orientierungsschicht, die Herstellung solcher Bauelemente und deren bevorzugte Verwendung.

Anisotrope transparente oder farbige Polymernetzwerkschichten mit einheitlicher oder punktweise vorgegebener räumlicher Orientierung der optischen Achse sind in vielen Bereichen der Displaytechnologie, der integrierten Optik, etc. von grossem Interesse.

Seit einigen Jahren sind Substanzen bekannt, die diese Eigenschaft im Prinzip besitzen, nämlich gewisse vernetzbare flüssigkristalline Diacrylate und Diepoxide. Diese Substanzen lassen sich als Monomere, d.h. vor der Vernetzung, in Zellen mit Hilfe konventioneller Orientierungsschichten oder unter Einwirkung äusserer Felder, z.B. magnetischer oder elektrischer Felder, in der LC-Phase orientieren und in einem zweiten Schritt konventionell, d.h. durch Bestrahlen mit unpolarisiertem Licht photovernetzen, ohne die im monomeren Zustand eingeprägte Orientierung zu verlieren.

Schichtstrukturen dieser Art sind z.B. aus EP-A 331 233 bekannt. Ihre Herstellung erfolgt, indem eine Monomerschicht im äusseren Feld orientiert und dann in einem Teilbereich durch eine Maske hindurch bestrahlt wird. Dabei wird nur im bestrahlten Bereich die Vernetzung ausgelöst. Anschliessend wird die Richtung des äusseren Feldes geändert, und die noch nicht vernetzten Monomerbereiche werden bezüglich der neuen Feldrichtung reorientiert. Daraufhin wird auch dieser Bereich beleuchtet und damit vernetzt. Es ist klar, dass dieses Verfahren nicht zu einer örtlich hochaufgelösten Orientierungsstruktur führen kann, da die radikalische Vernetzungsreaktion durch die Abschattung der Maske nicht scharf begrenzt wird.

Seit neuerer Zeit sind Verfahren bekannt, die es erlauben, Orientierungsschichten mit örtlich variablen Orientierungseigenschaften zu erzeugen. So ist z.B. in US-A 4,974,941 die Orientierung dichroitischer im Polymer eingelagerter Farbstoffmoleküle mit Hilfe photolithographischer Verfahren beschrieben.

In Research Disclosure Nr. 337, Seiten 410-411, sind Schichtstrukturen mit vernetzten flüssigkristallinen Monomeren offenbart, deren doppelbrechende Eigenschaften beispielsweise zur Herstellung von achromatischen lambda/4-Platten benutzt werden können. Schichtstrukturen aus einem Film vernetzter flüssigkristalliner Monomere in Kontakt mit einer Orientierungsschicht aus einem photo-orientierbaren Polymernetzwerk (PPN) sind in der EP-A-611 981 beschrieben. Die Herstellung dieser letzteren Schichtstrukturen erfolgt dadurch, dass die flüssigkristallinen Monomere durch die Wechselwirkung mit der PPN-Schicht orientiert und die Orientierungen in einem anschliessenden Vernetzungsschritt fixiert werden. Im übrigen wird hiermit auch auf die EP-A-689 084 Bezug genommen.

Der Erfindung liegt die Aufgabe zugrunde, weitere Möglichkeiten mit Schichtstrukturen der vorstehend erwähnten Art für optische und elektro-optische Bauelemente und Einrichtungen bereitzustellen.

Die Erfindung wird durch das optische Bauelement nach Anspruch 1 erreicht. Ein Reflektor kann eine diffuse oder spiegelnde Metalloberfläche, reflektierende Polymere, die z.B. Pigmente enthalten wie bei metallisierten Autolacken, reflektierendes Papier, dielektrische Spiegel etc. sein. Die Reflektoren müssen den Polarisationszustand des einfallenden Lichtes mindestens teilweise erhalten. Eine derartige Anordnung eignet sich erfindungsgemäss besonders zur Verwendung für die Fälschungs- und Kopiersicherung von Banknoten, Dokumenten, sowie auch zur Erzeugung von reflektiven Flüssigkristallanzeigen, zur Herstellung von optischen Bauteilen für die integrierte Optik, wie beispielsweise Wellenleiter, Gitter, nichtlinear optisch (NLO) aktive Substrate, elektro-optische Mach-Zender Modulatoren, etc. Der Bedarf und die Anforderungen an Fälschungssicherheit von Sicherheitselementen in Banknoten, Kreditkarten, Dokumenten usw., die dennoch eindeutig auch von Laien als solche erkannt werden, nehmen aufgrund der verfügbaren, hochqualitativen Kopiertechniken immer mehr zu. Die meisten der zur Zeit eingeführten Sicherheitsmerkmale, z.B. Hologramme oder Kinegrame (J.F. Moser, "Document Protection by optically variable graphics", in "Optical Document Security", R.L. van Renesse (ed.), Artech House, Boston, London, p. 169), basieren auf der Beugung von Licht an Gittern. Zur Verifizierung ihrer Echtheit müssen solche Sicherheitsmerkmale unter verschiedenen Blickwinkeln betrachtet werden. Als Resultat erhält man dreidimensionale Bilder, Farbwechselspiele oder kinematische Effekte, die nach Regeln geprüft werden müssen, die musterspezifisch sind. Daraus ergibt sich die Schwierigkeit, dass dem Laien viele dieser anspruchsvollen Regeln bekannt sein müssen, um die Echtheit eines solchen Sicherheitselementes visuell prüfen zu können. Ferner ist insbesondere die maschinelle Überprüfung solcher auf Beugung beruhender Sicherheitsmerkmale sehr aufwendig. Praktisch nicht realisierbar wird das maschinelle Einlesen von individueller Information, wie z.B. von Bildern oder Nummern, die mittels dieser Techniken codiert sind.

Cholesterische Flüssigkristalle, wie sie z.B. von Flüssigkristall-Thermometern her bekannt sind, werden in EP-A 435 029 als Sicherheitselemente beschrieben. Ähnlich wie bei den mechanischen Gittern ist bei cholesterischen Flüssigkristallen eine periodische Struktur vorhanden, die für die seit 1888 bekannte Eigenschaft sorgt, dass sich die Farbe des reflektierten Lichts mit dem Blickwinkel ändert. Die Echtheitsprüfung aufgrund der damit verbundenen Farbwechselspiele ist daher mit analogen Problemen wie bei den mechanischen Gittern behaftet.

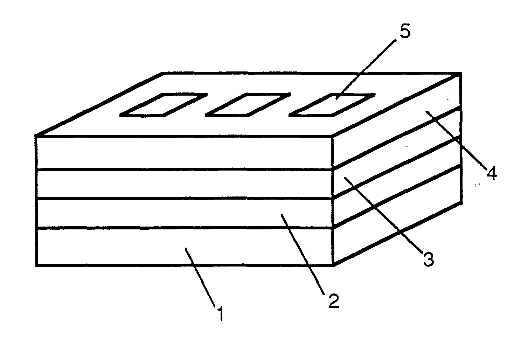

Im folgenden wird anhand der beiliegenden Zeichnung ein Ausführungsbeispiel der Erfindung beschrieben.

Die Figur zeigt schematisch einen Ausschnitt aus einer Schichtstruktur, die in einer fälschungssicheren Banknote vorliegt. Basis oder Substrat der Schichtstruktur ist eine Papierschicht 1, die mit herkömmlichem Banknotenpapier identisch ist. Bereits in vielen heute üblichen Banknoten ist ein Metallband oder -faden vorhanden, der eine gewisse Sicherheit gegen Fälschung bewirken soll. Auf dem Papier 1 befindet sich also in Teilbereichen der Fläche eine Metallschicht 2. Auf dieser ist eine Orientierungsschicht 3 aufgebracht, die orientierend auf eine darüber beschichtete Retarderschicht 4 wirkt. Die Orientierungsschicht 3 hat ein Muster, das sich auf die Retarderschicht 4 vor deren Vernetzung überträgt und dann in der Retarderschicht als Muster 5 vorhanden ist. Bei Betrachtung des mit dem Retardermuster beschichteten Metallbandes im unpolarisierten Licht sieht man den normalen Metallfaden. Betrachtet man die Konfiguration durch ein Polarisationsfilter, so wird das Muster sichtbar. Die Mustererkennung kann maschinell mittels polarisationssensitiven Detektoren oder visuell erfolgen.

Auf diese Weise lassen sich sehr elegant Kopierschutz und Fälschungssicherheit in Banknoten, Kreditkarten, Dokumente etc., einbauen. Das Retardermuster kann z.B. ein Bild oder einen Text enthalten. Es kann z.B. auch dazu verwendet werden, um normalerweise unsichtbare Codes bei Betrachtung mit einem Polarisationsfilter sichtbar zu machen.

Das erfindungsgemässe optische Bauelement kann aber auch anders ausgeführt sein als das in der Figur dargestellt ist. So kann der Reflektor selbst das Substrat sein. Weiter ist es möglich, dass das Substrat aus einem durchsichtigen Material besteht. In diesem Fall kann der Reflektor auf der der Orientierungsschicht gegenüberliegenden Substratseite angebracht sein oder es kann der Reflektor auf der dem Substrat gegenüberliegenden Seite der anisotropen Schicht vernetzter flüssigkristalliner Monomere angeordnet sein, wobei dann die anisotrope Schicht durch das Substrat hindurch betrachtet werden kann. Wenn das Substrat durchsichtig ist, besteht auch die Möglichkeit, dass das Substrat beidseitig mit je einer Schichtstruktur aus einer anisotropen Schicht vernetzter flüssigkristalliner Monomere in Kontakt mit einer Orientierungsschicht versehen ist oder dass die eine Seite der Substratoberfläche mit einer Schichtstruktur aus einer anisotropen Schicht vernetzter flüssigkristalliner Monomere in Kontakt mit einer Orientierungsschicht, die andere Substratoberfläche dagegen mit einer nicht-photostrukturierten Retarderschicht, bzw. Retarderfolie versehen ist. Ausserdem kann ein durchsichtiges Substrat optisch anisotrop sein.

Eine weitere Variante besteht darin, dass die anisotrope Schicht vernetzter flüssigkristalliner Monomere dichroitische Farbstoffmoleküle enthält.

Wegen der Unsichtbarkeit des Retardermusters bei Betrachtung mit unpolarisiertem Licht, kann die Schichtstruktur auch über anderen Sicherheitsmerkmalen angeordnet werden, ohne deren Eigenschaft zu beeinflussen. Durch diese Kombination mit anderen Kopiersicherheits-Technologien kann die Fälschungssicherheit noch erhöht werden.

Es ist auch möglich, in das Sicherheitselement eine Retarderschicht zu integrieren, deren optische Achse einen Winkel zur Oberfläche bildet. Durch Verkippen der Schicht lassen sich dann Farben oder hell-dunkel Effekte erzeugen, die unsymmetrisch zur unverkippten Lage sind.

Gegenüber bereits bekannten Sicherheitselementen zeichnet sich die Erfindung dadurch aus, dass die Echtheit des Sicherheitsmerkmals auch für den Laien einfach zu verifizieren ist, da das Erkennen von komplizierten Farbwechselspielen oder kinematischen Effekten nicht erst erlernt werden muss.

Weitere Einzelheiten der Erfindung werden aus den nachfolgenden Beispielen ersichtlich.

### Beispiel 1

### Herstellung einer PPN-Schicht

Als PPN-Material kommen z.B. Zimtsäurederivate in Frage. Für die Beispiele wurde ein PPN-Material mit hohem Glaspunkt (T_{g} = 133°C) ausgewählt:
Polymer:

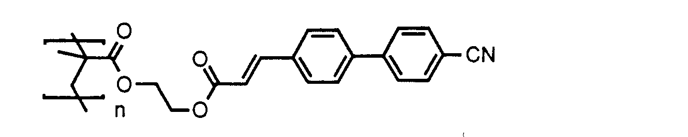

Eine Glasplatte wurde durch Spincoating mit einer 5-prozentigen Lösung des PPN-Materials in NMP für eine Minute bei 2000 UpM beschichtet. Die Schicht wurde dann 2 Stunden bei 130°C auf einer Wärmebank und weitere 4 Stunden bei 130°C im Vakuum getrocknet. Die Schicht wurde dann mit dem linear polarisierten Licht einer 200 W Hg Höchstdrucklampe 5 Minuten bei Raumtemperatur belichtet. Danach liess sich die Schicht als Orientierungsschicht für Flüssigkristalle einsetzen. Die thermische Stabilität der Orientierungsfähigkeit ist allerdings für viele Anwendungen zu klein. So ging die Orientierungsfähigkeit z.B. bei 120°C nach 15 Minuten verloren.

### Beispiel 2

### Mischung vernetzbarer LC-Monomere für die LCP-Schichten

Als vernetzbare LC-Monomere wurden in den Beispielen folgende Diacrylatkomponenten verwendet:

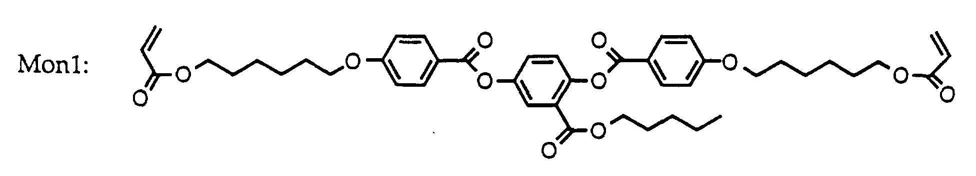

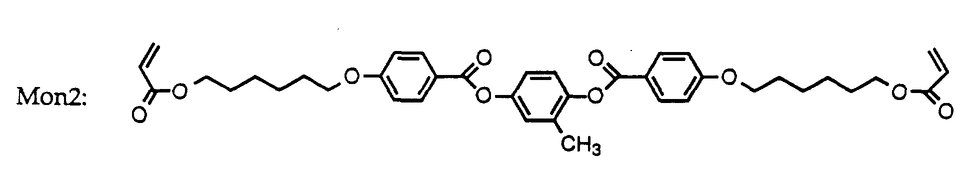

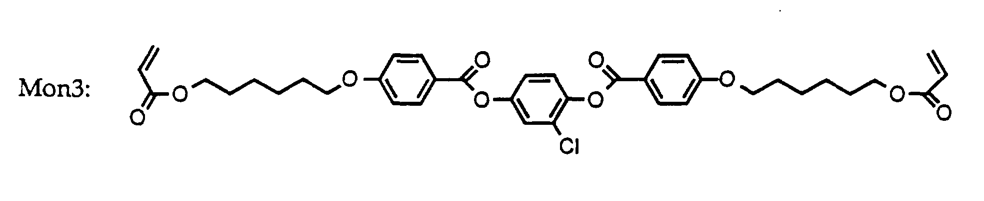

Mit diesen Komponenten wurde eine unterkühlbare, nematische Mischung M_{LCP} mit besonders tiefem Schmelzpunkt (Tm ≈ 35°C) entwickelt, die es erlaubt, die Präparation der LCP-Schicht bei Raumtemperatur auszuführen.

Die Diacrylat-Monomere sind in der folgenden Zusammensetzung in der Mischung vorhanden:

| | |
|---|---|
| Mon1 | 80% |
| Mon2 | 15% |
| Mon3 | 5% |

Zur Beschleuingung des Vernetzungsprozesses wurden der Mischung zusätzlich noch 2% des Photoinitiators IRGACURE 369 von Ciba-Geigy zugefügt.

Diese Mischung M_{LCP} wurde nun in Anisol gelöst und auf ein PPN-Substrat aufgebracht. Ueber die Konzentration von M_{LCP} in Anisol liess sich die LCP-Schichtdicke über einen weiten Bereich einstellen. Zur photoinduzierten Vernetzung der LC-Monomere wurden die Schichten nach ihrer Orientierung mit isotropem Licht einer 150 W Xenonlampe für ca. 30 Minuten bestrahlt und damit die Orientierung fixiert.

### Beispiel 3

### Retarder auf spiegelnd oder diffus reflektierender Metallschicht

Auf eine mit Aluminium bedampfte Glasplatte wurde eine PPN-Schicht aufgebracht und anschliessend mit linear polarisiertem UV-Licht bestrahlt, wobei die Polarisationsrichtung beim Belichten der einen Hälfte der Platte um 45° gegenüber der Polarisationsrichtung beim Belichten der anderen Hälfte verdreht war. Eine 30-prozentige Lösung von M_{LCP} in Anisol wurde durch Spincoating (2 min. bei 2000 UpM) auf die belichtete PPN-Schicht aufgebracht. Unter diesen Bedingungen erhielt man eine Schicht, die nach dem Vernetzen eine optische Verzögerung von ca. 140 nm besass. Das an der Metallschicht reflektierte Licht erfuhr jedoch die doppelte optische Verzögerung, also 280 nm. Dies entsprach etwa einer λ/2-Platte bezogen auf eine mittlere Wellenlänge im sichtbaren Teil des Spektrums.

Betrachtete man die reflektierende Schicht ohne Polarisator, so sah man nur eine optisch unstrukturierte reflektierende Platte. Hielt man jedoch einen Polarisator so vor die Platte, dass die Durchlassrichtung mit einer der beiden durch die Belichtung vorgegebenen Richtungen übereinstimmte, so erschien die entsprechende Hälfte der Platte hell, die andere dagegen tiefblau.
Damit ist es möglich, Informationen auf reflektierende Oberflächen zu schreiben, die nur mit Hilfe eines Polarisators gelesen werden können. Solche Retardermuster können etwa zu Zwecken des Kopierschutzes und der Echtheitsprüfung von Dokumenten, Banknoten usw. eingesetzt werden.

## Patentansprüche

1. Optisches Bauelement mit einem Substrat und einer Schichtstruktur aus einer anisotropen Schicht vernetzter flüssigkristalliner Monomere in Kontakt mit einer Orientierungsschicht, dadurch gekennzeichnet, dass es einen spiegelnden oder diffusen Reflektor aus Metall, einem reflektierenden Polymer, reflektierendem Papier, einem dielektrischen Spiegel oder aus einem sonstigen reflektierenden Material aufweist, der aus Sicht des Betrachters hinter der anisotropen Schicht angeordnet ist, und dass die Orientierungsschicht und die Flüssigkristallschicht ein Muster mit lokal variierender Molekülanordnung aufweisen.

2. Optisches Bauelement nach Anspruch 1, dadurch gekennzeichnet, dass das Substrat aus dem Reflektor besteht.

3. Optisches Bauelement nach Anspruch 1, dadurch gekennzeichnet, dass das Substrat aus einem durchsichtigen Material besteht.

4. Optisches Bauelement nach Anspruch 3, dadurch gekennzeichnet, dass der Reflektor auf der der Orientierungsschicht gegenüberliegenden Substratseite angebracht ist.

5. Optisches Bauelement nach Anspruch 3, dadurch gekennzeichnet, dass der Reflektor auf der dem Substrat gegenüberliegenden Seite der anisotropen Schicht vernetzter flüssigkristalliner Monomere angeordnet ist, wobei die anisotrope Schicht durch das Substrat hindurch betrachtet werden kann.

6. Optisches Bauelement nach Anspruch 3, dadurch gekennzeichnet, dass das durchsichtige Substrat beidseitig mit je einer Schichtstruktur aus einer anisotropen Schicht vernetzter flüssigkristalliner Monomere in Kontakt mit einer Orientierungsschicht versehen ist.

7. Optisches Bauelement nach Anspruch 3, dadurch gekennzeichnet, dass die eine Seite der Substratoberfläche mit einer Schichtstruktur aus einer anisotropen Schicht vernetzter flüssigkristalliner Monomere in Kontakt mit einer Orientierungsschicht, die andere Substratoberfläche dagegen mit einer nicht-photostrukturierten Retarderschicht, bzw. Retarderfolie versehen ist.

8. Optisches Bauelement nach einem der vorangehenden Ansprüche, dadurch gekennzeichnet, dass durch die Orientierungsschicht ein Kippwinkel in der anisotropen Schicht vernetzter flüssigkristalliner Monomere induziert wird, sodass deren optische Achse schräg zur Substratoberfläche steht.

9. Optisches Bauelement nach einem der vorangehenden Ansprüche, dadurch gekennzeichnet, dass die anisotrope Schicht vernetzter flüssigkristalliner Monomere dichroitische Farbstoffmoleküle enthält.

10. Optisches Bauelement nach einem der vorangehenden Ansprüche, dadurch gekennzeichnet, dass der Reflektor metallisch ist.

11. Optisches Bauelement nach Anspruch 10, dadurch gekennzeichnet, dass der Reflektor ein Metallfaden ist.

12. Optisches Bauelement nach einem der Ansprüche 1-11, dadurch gekennzeichnet, dass die Schichtstruktur aus vernetzten flüssigkristallinen Monomeren und der Orientierungsschicht über anderen Sicherheitsmerkmalen angeordnet ist.

13. Optisches Bauelement nach einem der vorangehenden Ansprüche, dadurch gekennzeichnet, dass die Orientierungsschicht aus einem photoorientierbaren Polymernetzwerk (PPN) besteht.

14. Verwendung eines optischen Bauelements nach einem der vorangehenden Ansprüche zur Fälschungs- und Kopiersicherung.

15. Verwendung eines optischen Bauelements nach einem der Ansprüche 1-14 in Banknoten.

16. Verwendung eines optischen Bauelements nach einem der Ansprüche 1-14 in Kreditkarten.

17. Verwendung eines optischen Bauelements nach einem der Ansprüche 1-13, dadurch gekennzeichnet, dass die Orientierungsschicht und die Flüssigkristallschicht ein Muster mit lokal variierender Molekülanordung aufweisen, das in manuell oder automatisch betriebenen optischen Leseeinrichtungen detektiert wird.

## Claims

1. Optical component having a substrate and a layered structure composed of an anisotropic layer of crosslinked liquid-crystalline monomers in contact with an orientation layer, characterised in that it has a mirroring or diffuse reflector made of metal, of a reflecting polymer, of reflecting paper, of a dielectric mirror or of some other reflecting material, which reflector is arranged behind the anisotropic layer from the viewpoint of the observer, and the orientation layer and the liquid-crystalline layer have a pattern with a locally varying molecular arrangement.

2. Optical component according to claim 1, characterised in that the substrate consists of the reflector.

3. Optical component according to claim 1, characterised in that the substrate consists of a transparent material.

4. Optical component according to claim 3, characterised in that the reflector is applied to the side of the substrate lying opposite the orientation layer.

5. Optical component according to claim 3, characterised in that the reflector is arranged on the side of the anisotropic layer of crosslinked liquid-crystalline monomers lying opposite the substrate, it being possible to view the anisotropic layer through the substrate.

6. Optical component according to claim 3, characterised in that the transparent substrate is provided on each side with a layered structure composed of an anisotropic layer of crosslinked liquid-crystalline monomers in contact with an orientation layer.

7. Optical component according to claim 3, characterised in that one side of the substrate surface is provided with a layered structure composed of an anisotropic layer of crosslinked liquid-crystalline monomers in contact with an orientation layer, whereas the other substrate surface is provided with a non-photostructured retarder layer or retarder film.

8. Optical component according to any one of the preceding claims, characterised in that a tilt angle is induced in the anisotropic layer of crosslinked liquid-crystalline monomers by means of the orientation layer, so that the optical axis of the anisotropic layer is inclined relative to the surface of the substrate.

9. Optical component according to any one of the preceding claims, characterised in that the anisotropic layer of crosslinked liquid-crystalline monomers contains dichroitic dye molecules.

10. Optical component according to any one of the preceding claims, characterised in that the reflector is metallic.

11. Optical component according to claim 10, characterised in that the reflector is a metal thread.

12. Optical component according to any one of claims 1 to 11, characterised in that the layered structure composed of crosslinked liquid-crystalline monomers and the orientation layer is arranged over other security features.

13. Optical component according to any one of the preceding claims, characterised in that the orientation layer consists of a photo-orientatable polymer network (PPN).

14. Use of an optical component according to any one of the preceding claims in counterfeit- or copy-protection.

15. Use of an optical component according to any one of claims 1 to 14 in bank notes.

16. Use of an optical component according to any one of claims 1 to 14 in credit cards.

17. Use of an optical component according to any one of claims 1 to 13, characterised in that the orientation layer and the liquid-crystalline layer have a pattern with a locally varying molecular arrangement, which pattern is detected in manually or automatically operated optical reading devices.

## Revendications

1. Composant optique incluant un substrat et une structure de couches constituée d'une couche anisotrope de monomères réticulés de cristaux liquides au contact d'une couche d'orientation, caractérisé en ce qu'il comprend un réflecteur à effet de miroir ou de diffusion consistant en un métal, un polymère réfléchissant, un papier réfléchissant, un miroir diélectrique ou une autre matière réfléchissante quelconque, qui est agencé derrière la couche anisotrope selon la vue de l'observateur, et en ce que la couche d'orientation et la couche de cristaux liquides comportent un motif à agencement moléculaire variant localement.

2. Composant optique selon la revendication 1, caractérisé en ce que le substrat se compose du réflecteur.

3. Composant optique selon la revendication 1, caractérisé en ce que le substrat se compose d'une matière transparente.

4. Composant optique selon la revendication 3, caractérisé en ce que le réflecteur est appliqué sur le côté du substrat qui est opposé à la couche d'orientation.

5. Composant optique selon la revendication 3, caractérisé en ce que le réflecteur est agencé sur le côté de la couche anisotrope de monomères réticulés de cristaux liquides qui est opposé au substrat, la couche anisotrope pouvant être observée à travers le substrat.

6. Composant optique selon la revendication 3, caractérisé en ce que le substrat transparent comporte sur chacun de ses côtés une structure de couches constituée d'une couche anisotrope de monomères réticulés de cristaux liquides au contact d'une couche d'orientation.

7. Composant optique selon la revendication 3, caractérisé en ce que l'un des côtés de la surface de substrat comporte une structure en couches constituée d'une couche anisotrope de monomères réticulés de cristaux liquides au contact d'une couche d'orientation et que l'autre surface de substrat comporte en revanche une couche retardatrice, ou feuille retardatrice, qui n'est pas photostructurée.

8. Composant optique selon l'une quelconque des revendications précédentes, caractérisé en ce que la couche d'orientation induit un angle d'inclinaison dans la couche anisotrope de monomères réticulés de cristaux liquides, de sorte que l'axe optique de celle-ci est oblique par rapport à la surface de substrat.

9. Composant optique selon l'une quelconque des revendications précédentes, caractérisé en ce que la couche anisotrope de monomères réticulés de cristaux liquides contient des molécules colorantes dichroïques.

10. Composant optique selon l'une quelconque des revendications précédentes, caractérisé en ce que le réflecteur est métallique.

11. Composant optique selon la revendication 10, caractérisé en ce que le réflecteur est un fil métallique.

12. Composant optique selon l'une quelconque des revendications précédentes, caractérisé en ce que la structure de couches constituée des monomères réticulés de cristaux liquides et de la couche d'orientation est agencée au-dessus d'autres éléments de sécurité.

13. Composant optique selon l'une quelconque des revendications précédentes, caractérisé en ce que la couche d'orientation se compose d'un réseau polymères photo-orientable (PPN).

14. Utilisation d'un composant optique selon l'une quelconque des revendications précédentes pour la protection contre les falsifications et les copies.

15. Utilisation d'un composant optique selon l'une quelconque des revendications précédentes dans des billets de banque.

16. Utilisation d'un composant optique selon l'une quelconque des revendications 1 à 14 dans des cartes de crédit.

17. Utilisation d'un composant optique selon l'une quelconque des revendications 1 à 13, caractérisé en ce que la couche d'orientation et la couche de cristaux liquides comportent un motif à agencement moléculaire variant localement qui est détecté dans des dispositifs optiques de lecture à fonctionnement manuel ou automatique.
